# EUROPÄISCHE PATENTANMELDUNG

(11) **EP 3 757 307 A1**
(43) Veröffentlichungstag der Anmeldung: **30.12.2020**
(21) Anmeldenummer: 20180890.4
(22) Anmeldetag: 18.06.2020
(51) Int. Cl.: E04B 1/70, F26B 21/00, F26B 21/08

(54) **TROCKNUNGSVORRICHTUNG UND -VERFAHREN**

(30) Priorität: 24.06.2019 DE 102019116899
(71) Anmelder: LASCO Heutechnik GmbH, 5221 Lochen (AT)
(72) Erfinder: Landrichinger, Johannes, 5221 Lochen (AT); Landrichinger, Werner, 5221 Lochen (AT); Oitner, Herbert, 5221 Lochen (AT)
(74) Vertreter: Heyerhoff Geiger & Partner Patentanwälte PartGmbB

(57) **Zusammenfassung**

Die vorliegende Erfindung betrifft eine Trocknungsvorrichtung 1 zum Beheizen, insbesondere zum Trocknen, eines Bauwerks 2 sowie ein entsprechendes Trocknungsverfahren 100. Es ist ein Ventilator 3 zur Erzeugung eines Luftstroms 4 und ein Luftentfeuchter 5 zum Entfeuchten des Luftstroms 4 vorgesehen. Der Luftentfeuchter 5 umfasst dabei einen Wärmetauscher 6 zum Abkühlen des Luftstroms 4 beim Entfeuchten. Der Wärmetauscher 6 ist dabei zur Kopplung mit einem Heizungssystem 20 des zu beheizenden Bauwerks 2 eingerichtet.

## Beschreibung

Die vorliegende Erfindung betrifft eine Trocknungsvorrichtung zum Beheizen, insbesondere zum Trocknen, eines Bauwerks sowie ein entsprechendes Trocknungsverfahren.

Beim Errichten von Bauwerken wird in der Regel Feuchtigkeit in das Bauwerk eingebracht. Zum Beispiel müssen einige Baustoffe wie Beton, Putz, Mörtel, Estriche und Farbe nass verarbeitet werden. Gegebenenfalls können aber auch andere, trocken verarbeitbare Baustoffe wie Holz oder Mauerziegel durch die Lagerung vor der Verbauung eine gewisse Feuchtigkeit aufnehmen. Die dadurch bedingte Gebäudefeuchtigkeit wird üblicherweise als Baufeuchte bezeichnet. Daneben kann Feuchtigkeit aber auch durch entsprechende Witterungsbedingungen direkt, z.B. in den Rohbau, eintreten. Wird gegen diese Feuchtigkeit nichts ausgerichtet, können zahlreiche Bauschäden wie etwa Schimmelbildung oder die Zersetzung organischer Baustoffe wie etwa Mauerwerk oder Holzbalken auftreten, die gesundheitliche und/oder baustrukturelle Gefahren bergen.

Daher ist es üblich, Bauwerke, insbesondere nach deren Errichtung, zu trocknen. Ein Ansatz besteht beispielsweise darin, aus den Baumaterialien verdunstende Feuchtigkeit durch umfängliche Lüftung abzuführen. Dabei spielt die relative Luftfeuchtigkeit, welche die Wasseraufnahmefähigkeit der Luft angibt, eine wichtige Rolle. Eine Möglichkeit, die Wasseraufnahmefähigkeit der Luft zu erhöhen, besteht beispielsweise darin, die Lufttemperatur zu erhöhen. Die erwärmte Luft kann eine größere Menge an Feuchtigkeit aufnehmen.

Dazu ist es aus dem Stand der Technik bekannt, Gasöfen zur Erwärmung von Wasser in einem Wassertank einzusetzen und das erwärmte Wasser aus dem Wassertank in ein Heizungssystem des zu beheizenden Bauwerks zu leiten.

Es ist eine Aufgabe der Erfindung, die Beheizung von Bauwerken weiter zu verbessern, insbesondere flexibler zu gestalten und/oder die Sicherheit beim Beheizen zu erhöhen.

Diese Aufgabe wird gelöst durch eine Trocknungsvorrichtung zum Beheizen eines Bauwerks und ein entsprechendes Trocknungsverfahren gemäß den unabhängigen Ansprüchen.

Eine Trocknungsvorrichtung zum Beheizen, insbesondere zum Trocknen, eines Bauwerks gemäß einem ersten Aspekt der Erfindung weist einen Ventilator zur Erzeugung eines Luftstroms und einen Luftentfeuchter zum Entfeuchten des Luftstroms auf. Der Luftentfeuchter kann ein Kühlregister mit einem Wärmetauscher zum Abkühlen des Luftstroms aufweisen und zweckmäßigerweise einen Kondensator zum Entfeuchten. Erfindungsgemäß ist der Wärmetauscher dabei zumindest indirekt über eine Leitung zur Kopplung mit einem Heizungssystem des zu beheizenden Bauwerks eingerichtet.

Ein Luftentfeuchter im Sinne der Erfindung ist insbesondere eine Vorrichtung, die dazu eingerichtet ist, einen Luftstrom abzukühlen, insbesondere auf eine Temperatur unter den Taupunkt der im Luftstrom enthaltenen Luft, und die dabei kondensierende Feuchtigkeit abzuführen. Der Luftentfeuchter weist zu diesem Zweck einen Wärmetauscher auf, der vorzugsweise ein Arbeitsmedium führt, und der zum Übertragen von der Luft entzogener Wärmeenergie auf das Arbeitsmedium eingerichtet ist. Der Wärmetauscher kann insbesondere einen Arbeitsmediumkreislauf umfassen. Das Arbeitsmedium aus dem Kreislauf nimmt Wärme aus dem zu entfeuchtenden Luftstrom auf und verdampft dabei vorzugsweise. Das verdampfte Arbeitsmedium kann dann komprimiert werden, sodass es unter Wärmeabgabe in einem Kondensator kondensiert und so wieder zur Aufnahme von Wärme aus dem Luftstrom bereitsteht. Die vom Arbeitsmedium abgegebene Wärme kann einen Heizmedium des Heizungssystems des zu beheizenden Bauwerks zugeführt werden. Das Arbeitsmedium kann das Heizmedium sein oder in einem davon getrennten Arbeitsmediumkreislauf geführt werden.

Alternativ kann der Wärmetauscher aber auch ohne einen solchen Arbeitsmediumkreislauf ausgebildet sein. Insbesondere kann der Luftentfeuchter dazu eingerichtet sein, das Arbeitsmedium beispielsweise aus einem Reservoir zu entnehmen und durch den Wärmetauscher zu führen, um Wärme aus dem Luftstrom auf das Arbeitsmedium zu übertragen. Das Reservoir kann vom Heizungssystem des Bauwerks bereitgestellt werden. Der Luftentfeuchter kann weiterhin dazu eingerichtet sein, das aufgeheizte Arbeitsmedium abzuführen.

Das vom Wärmetauscher geführte Arbeitsmedium kann insbesondere Wasser sein.

Eine Kopplung zwischen einem Wärmetauscher und einem Heizungssystem im Sinne der Erfindung ist insbesondere eine unmittelbare oder mittelbare Verbindung des Wärmetauschers mit dem Heizungssystem, die zumindest die Übertragung einer energetischen Quantität, zum Beispiel von thermischer Energie, erlaubt. Vorzugsweise erlaubt eine Kopplung jedoch auch die Übertragung einer stofflichen Quantität, zum Beispiel eines Arbeitsmediums.

Ein Aspekt der Erfindung basiert auf dem Ansatz, einen Luftentfeuchter zum Zwecke der Gebäudebeheizung, insbesondere zur Bautrocknung, einzusetzen, wobei die beim Entfeuchten eines Luftstroms gewonnene Wärme an ein Heizungssystem des zu beheizenden Bauwerks übertragbar ist. Zu diesem Zweck ist ein Wärmetauscher des Luftentfeuchters mit dem Heizungssystem koppelbar ausgebildet. Der Luftentfeuchter kann die z.B. zur Bautrocknung benötigte Wärme dann grundsätzlich ohne längere Vorlaufzeit bereitstellen. Eine Trocknungsvorrichtung, die den Luftentfeuchter sowie einen Ventilator zur Erzeugung des Luftstroms umfasst, kann somit die Zentralheizung eines Bauwerks zum Zwecke der Gebäudebeheizung ersetzen oder zumindest ergänzen.

Luftentfeuchter sind in der Regel kompakte Anlagen und daher leicht zu transportieren. Im Gegensatz zu konventionellen Anlagen, die zum Beispiel auf gasgestützter Erwärmung eines Wassertanks basieren, lässt sich eine Trocknungsvorrichtung mit einem Luftentfeuchter und einem Ventilator zu Erzeugung des Luftstroms deutlich leichter transportieren und somit flexibler einsetzen. Z.B. ist es dadurch denkbar, nicht nur neu errichtete Bauwerke mittels einer solchen Trocknungsvorrichtung zur trocknen, sondern auch eine bestehende Zentralheizung eines älteren Gebäudes im Bedarfsfall, z.B. nach einem Wasserschaden, zu unterstützen.

Der Einsatz eines Luftentfeuchters z.B. zur Bautrocknung kann außerdem auch unter sicherheitsrelevanten Gesichtspunkten vorteilhaft sein. Insbesondere ist es zum Beispiel nicht notwendig, eine Flamme zu Erwärmung eines im Heizungssystem zirkulierenden Heizmediums zu erzeugen und/oder den dazu erforderlichen Brennstoff, zum Beispiel in Form von leicht entzündlichen Gas, vorzuhalten.

Zur Kopplung des Wärmetauschers an das Heizungssystem ist denkbar, insbesondere einen Kondensator des Wärmetauschers, an dem aufgeheiztes, gasförmiges Arbeitsmedium des Wärmetauschers kondensiert und dabei seine Wärme abgibt, mit dem Heizungssystem zu koppeln. Beispielsweise kann der Kondensator an einer Heizmediumleitung des Heizungssystems anordenbar ausgebildet sein. Insbesondere kann der Kondensator dazu eingerichtet sein, eine Heizmediumleitung des Heizungssystems aufzunehmen, sodass ein Heizmedium des Heizungssystems wie z.B. Wasser zum Aufnehmen thermischer Energie durch den Kondensator geführt werden kann. Eine derartige Kopplung des Kondensators mit dem Heizungssystem erlaubt es, den Luftentfeuchter mit einem vom Heizmedium verschiedenen Arbeitsmedium zu betreiben, wobei das Arbeitsmedium z.B. derart wählbar ist, dass es die Effizienz Wärmegewinnung aus dem Luftstrom optimiert.

Zudem ist es möglich, auch die entfeuchtete Luft einem Verwendungszweck zuzuführen und somit die Effizienz der Trocknungsvorrichtung weiter zu erhöhen. Gegebenenfalls kann die entfeuchtete Luft z.B. erwärmt und zur Verbesserung der Beheizung, insbesondere Trocknung, in das zu beheizende Bauwerk geleitet werden. Es ist aber auch denkbar, die entfeuchtete, vorzugsweise auch erwärmte Luft, zum Trocknen eines Trocknungsguts, z.B. eines landwirtschaftlichen Gutes wie Heu, Stroh, Mais, Tierfutter und/oder dergleichen, einzusetzen. Dabei kann die entfeuchtete Luft beispielsweise in eine Scheune oder ein Silo eingeleitet werden. Die Trocknungsvorrichtung kann in diesem Fall vorteilhaft zur Beheizung z.B. eines Stalls oder eines Bauernhauses vorgesehen sein.

Nachfolgend werden bevorzugte Ausführungsformen der Erfindung und deren Weiterbildungen beschrieben, die jeweils, soweit dies nicht ausdrücklich ausgeschlossen wird, beliebig miteinander sowie mit den im Weiteren beschriebenen Aspekten der Erfindung kombiniert werden können.

In einer bevorzugten Ausführungsform ist der Wärmetauscher zum Herstellen einer Verbindung mit dem Heizungssystem eingerichtet. Vorzugsweise ist die Trocknungsvorrichtung dabei zum Einleiten eines Arbeitsmediums des Wärmetauschers in das Heizungssystem über die hergestellte Verbindung eingerichtet. Bei der Verbindung handelt es sich vorzugsweise um eine flüssigleitende Verbindung, über die ein flüssiges Arbeitsmedium vom Wärmetauscher in das Heizungssystem und/oder vom Heizungssystem in den Wärmetauscher eingeleitet werden kann. Insbesondere kann der Wärmetauscher zum Anschluss an eine Heizmediumleitung des Heizungssystems ausgebildet sein, sodass das Heizmedium des Heizungssystems, z.B. Wasser, den Wärmetauscher als Arbeitsmedium durchlaufen kann. Mit anderen Worten kann der Wärmetauscher in das Heizungssystem integrierbar ausgebildet sein. Dadurch können Wärmeverluste bei der Übertragung thermischer Energie vom Luftstrom auf das Heizmedium verringert werden.

In einer weiteren bevorzugten Ausführungsform weist die Trocknungsvorrichtung eine Ansaugeinrichtung auf, die zum Führen von Luft aus dem zu beheizenden Bauwerk zum Luftentfeuchter eingerichtet ist. Die Ansaugeinrichtung kann insbesondere dazu eingerichtet sein, Luft aus dem zu beheizenden Bauwerk abzusaugen und am Luftentfeuchter zur Entfeuchtung bereitzustellen. Dies ist vorteilhaft, da die Lufttemperatur in Bauwerken üblicherweise höher ist als die Außenlufttemperatur. Dadurch kann sichergestellt werden, dass dem Luftentfeuchter Luft mit einer zu dessen effizienten Betrieb ausreichenden Temperatur zugeführt wird. Zudem kann auf diese Weise die gegebenenfalls feuchtigkeitsgesättigte Luft aus dem Bauwerk abgeführt werden, sodass frische, ungesättigte Luft nachströmen kann. Es ergibt sich somit ein Synergieeffekt zwischen Absaugen der Luft aus dem Bauwerk und Erwärmen des Bauwerks mithilfe der aus der abgesaugten Luft beim Entfeuchten entnommenen Wärme.

Insbesondere kann dadurch ein Skalierungseffekt erzielt werden. Durch die bei der Luftentfeuchtung entstehende und zur Gebäudebeheizung genutzte Wärme beginnt das Bauwerk, sich zu erwärmen, wodurch eine verstärkte Verdunstung z.B. der Baufeuchte auftritt. Durch die Erwärmung kann sich auch die Lufttemperatur im Bauwerk erhöhen, wodurch die Luft im Gebäude mehr Feuchtigkeit, insbesondere die verstärkt verdunstende Baufeuchte, aufnehmen kann. Die Luft wird durch die Ansaugeinrichtung zum Luftentfeuchter geleitet, welcher der warmen, feuchten Luft bei der Entfeuchtung nun eine größere Wärmemenge entziehen kann, die wiederum zum Erwärmen des Bauwerks einsetzbar ist. Die Verdunstung kann dadurch weiter gesteigert werden, ebenso wie die Lufttemperatur im Gebäude weiter erhöht werden kann, was wiederum die dem Luftstrom entziehbare Wärmemenge erhöht. Es kann so ein besonders effiziente Betrieb des Luftentfeuchters, insbesondere unabhängig von der Außentemperatur, sichergestellt werden.

Das Vorsehen einer Ansaugeinrichtung ermöglicht es gegebenenfalls auch, die Trocknungsvorrichtung bei für den Betrieb des Luftentfeuchters ungünstigen Witterungsbedingungen, z.B. trockener Außenluft, zu betreiben. Insbesondere kann auf diese Weise sichergestellt werden, dass dem Luftentfeuchter zugeführte Luft einen ausreichenden Feuchtigkeitsanteil enthält, der einen effizienten Wärmeentzug aus dem Luftstrom ermöglicht. Zudem ist es so auch denkbar, die Trocknungsvorrichtung bei sehr niedrigen Außentemperaturen von zum Beispiel unter 10° effizient zu betreiben. Die Ansaugeinrichtung ermöglicht daher auch einen besonders flexiblen Einsatz der Trocknungsvorrichtung.

Die Ansaugeinrichtung weist vorzugsweise einen Luftkanal auf, der mit einem ersten Ende in den Luftentfeuchter mündet, und dessen gegenüberliegendes zweites Ende im Gebäude positionierbar ist. Die Ansaugeinrichtung kann beispielsweise als, vorzugsweise flexibler, Luftführschlauch ausgebildet sein, zum Beispiel in Form einer Stoffröhre, die gegebenenfalls mit einem spiral- bzw. schraubenförmig gewundenen Draht formstabilisiert sein kann. Das zweite Ende des Luftführschlauchs kann auf diese Weise leicht innerhalb des Bauwerks platziert werden.

In einer weiteren bevorzugten Ausführungsform weist die Trocknungsvorrichtung eine Steuerungseinrichtung auf, die dazu eingerichtet ist, den Luftentfeuchter derart zu steuern, dass eine pro Zeiteinheit vom Wärmetauscher über die Kopplung an das Heizungssystem übertragene Wärmemenge einen vorgegebenen Wärmemengenschwellenwert nicht erreicht oder überschreitet. Mit anderen Worten kann die Steuerungseinrichtung dazu eingerichtet sein, die Leistung des Luftentfeuchters zu steuern. Der Wärmemengenschwellenwert kann dabei durch verschiedene Parameter vorgegeben sein, zum Beispiel durch den Bauwerktyp, die Bauwerkgröße, beim Bau verwendete Materialien, den Heizungssystemtyp, das verwendete Arbeitsmedium des Wärmetauschers, das verwendete Heizmedium des Heizungssystems und/oder dergleichen. Bei einem großen Gebäude kann der vorgegebene Wärmemengenschwellenwert beispielsweise höher sein als bei einem kleinen Gebäude. Dies erlaubt eine bauwerksindividuelle Steuerung des Trocknungsprozesses. Dadurch kann z.B. sichergestellt werden, dass das Heizungssystem nicht überlastet wird und/oder keine Gebäudeschäden durch zu hohe Heiztemperaturen hervorgerufen werden.

In einer weiteren bevorzugten Ausführungsform weist die Trocknungsvorrichtung eine Steuerungseinrichtung auf, die dazu eingerichtet ist, den Luftentfeuchter und/oder den Ventilator in Abhängigkeit eines sensorisch erfassten Betriebsparameters der Trocknungsvorrichtung zu steuern. Unter Betriebsparametern werden hierbei alle Parameter verstanden, von denen der Betrieb und/oder die Wirkung der Trocknungsvorrichtung abhängen, d. h. die einen Einfluss auf den Trocknungsprozess haben. Bei den Betriebsparametern kann es sich beispielsweise um Umgebungsparameter wie Umgebungstemperatur oder um Gebäudeparameter wie Gebäudetemperatur handeln. Zum Beispiel kann die Steuerungseinrichtung dazu eingerichtet sein, den Luftentfeuchter in Abhängigkeit einer Luftfeuchtigkeit und/oder Lufttemperatur, insbesondere innerhalb und/oder außerhalb des Gebäudes, zu steuern. Alternativ oder zusätzlich kann die Steuerungseinrichtung auch dazu eingerichtet sein, den Luftentfeuchter und/oder den Ventilator in Abhängigkeit einer Gemäuertemperatur, einer Temperatur des Arbeitsmediums des Wärmetauschers und/oder einer Temperatur des Heizmediums des Heizungssystems zu steuern. Dadurch kann der Gebäudetrocknungsprozess optimiert und/oder besonders sicher gestaltet werden.

Beispielsweise kann die Steuerungseinrichtung den Ventilator bei geringen Außentemperaturen und/oder geringer Außenluftfeuchte mit erhöhter Leistung betreiben, um dem Luftentfeuchter eine ausreichende Luftmenge zum Wärmeentzug bei der Entfeuchtung zuzuführen. Ebenso kann dabei auch der Entfeuchter mit erhöhter Leistung betrieben werden, zum Beispiel um den Luftstrom stärker abzukühlen und damit die dem Luftstrom entzogene Wärmemenge zu erhöhen.

In einem weiteren Beispiel kann die Steuerungseinrichtung die Leistung des Luftentfeuchters und/oder Ventilators drosseln, wenn zum Beispiel die Arbeitsmediumtemperatur, die Heizmediumtemperatur, die Lufttemperatur im Gebäude und/oder die Gemäuertemperatur einen vorgegebenen Temperaturschwellenwert erreicht oder überschreitet, um eine Überlastung oder sogar Beschädigung der Trocknungsvorrichtung bzw. des Heizungssystems zu vermeiden. Dabei können solche Temperaturschwellenwerte zum Beispiel in Abhängigkeit des Bauwerktyps, der Bauwerksgröße, der verwendeten Baumaterialien und/oder dergleichen vorgegeben sein.

In einer weiteren bevorzugten Ausführungsform weist die Trocknungsvorrichtung eine Sensoreinrichtung auf, die dazu eingerichtet ist, einen Betriebsparameter der Trocknungsvorrichtung zu erfassen. Wie vorstehend bereits ausgeführt werden unter Betriebsparameter hierbei alle Parameter verstanden, von denen der Betrieb und/oder die Wirkung der Trocknungsvorrichtung abhängen, d. h. die einen Einfluss auf den Trocknungsprozess haben. Der erfasste Betriebsparameter kann dann der Steuerung des Luftentfeuchters und/oder Ventilators zugrunde gelegt werden. Das Vorsehen einer eigenen Sensoreinrichtung erlaubt dabei eine besonders zuverlässige, insbesondere im Wesentlichen kontinuierliche Steuerung des Luftentfeuchters und/oder Ventilators.

Je nach Auslegung des Luftentfeuchters und des Heizungssystems des Bauwerks kann es sein, dass der Luftentfeuchter das Heizmedium - direkt oder indirekt aufgeheizt - nicht auf eine Temperatur aufheizen kann, die zur Gebäudetrocknung benötigt wird. Um eine solche Temperatur doch zu erreichen, kann ein Wärmemittelkreislauf vorhanden sein, in dem zweckmäßigerweise ein Kühlregister des Luftentfeuchters angeordnet ist. Das Arbeitsmedium kann nun im Kreis durch das Kühlregister geführt und dort mehrfach hintereinander aufgeheizt werden, ohne dass es seine Wärme an das Heizungssystem abgibt. Der Wärmemittelkreislauf ist hierfür vorzugsweise frei von einer Wärmeabgabeeinrichtung zur Abgabe von Wärme an das Heizsystem ausgeführt. Zur Steuerung und insbesondere Regelung der Temperatur des Wärmemittels ist zweckmäßigerweise eine Steuerungseinrichtung vorhanden, die dazu eingerichtet ist, das Wärmemittel so lange im Wärmemittelkreislauf im Kreis zu führen, bis eine Solltemperatur des Wärmemittels erreicht ist. Das Wärmemittel kann das Arbeitsmedium sein. Eine geeignete Solltemperatur liegt vorteilhafterweise zwischen 45°C und 75°C, sodass ein Radiatorensystem des Heizungssystems auf eine für Radiatoren übliche Temperatur aufgeheizt werden kann.

Je nach Jahreszeit beziehungsweise Außentemperatur kann es vorteilhaft sein, die zur Trocknung verwendete Luft aus dem Gebäude oder von außerhalb des Gebäudes zu verwenden. Eine hohe Flexibilität bei der Wahl der Luft zu erreichen, ist es vorteilhaft, wenn die Trocknungsvorrichtung über eine Luftführung zur Zuführung von Luft zum Luftentfeuchter verfügt, die eine Luftkanalweiche mit zwei Zuluftkanälen enthält. Zweckmäßigerweise sind die Zuluftkanäle so ausgeführt, dass einer der Zuluftkanäl innerhalb des Bauwerks endet und der andere Zuluftkanal außerhalb des Bauwerks endet. Die Steuerung der Luftkanalweiche kann von einer Steuerungseinrichtung übernommen werden. Zur Umsetzung der Steuerbefehle umfasst die Luftkanalweiche zweckmäßigerweise eine bewegliche und von der Steuerungseinrichtung ansteuerbare Klappe, mit denen die Zuluftkanäle selektiv verschlossen bzw. geöffnet werden können.

In einer weiteren bevorzugten Ausführungsform weist die Trocknungsvorrichtung einen Wärmespeicher auf, der zusätzlich zum Wärmetauscher mit dem Heizungssystem koppelbar ausgebildet ist, wobei die Trocknungsvorrichtung dazu eingerichtet ist, aus dem Wärmespeicher entnommene Wärme am Heizungssystem bereitzustellen. Dadurch kann insbesondere zusätzliche Wärme in das Heizungssystem eingeführt werden. Dies ist zum Beispiel vorteilhaft, wenn, z.B. in einer Anfangsphase der Bauwerktrocknung, eine besonders starke Heizleistung erzielt werden soll. Dies kann aber auch vorteilhaft sein, wenn die Luftstromtrocknung bei einer Inbetriebnahme der Trocknungsvorrichtung nur eine begrenzte Wärmemenge liefert, etwa weil die Luftfeuchte oder die Lufttemperatur des Luftstroms gering sind. Insbesondere lassen sich mit dem Wärmespeicher Engstellen in der Wärmeerzeugung durch den Luftentfeuchter überbrücken.

Ein Wärmespeicher im Sinne der Erfindung ist insbesondere eine Vorrichtung, die dazu eingerichtet ist, ihr zugeführte Wärme in Form von Wärme- bzw. thermischer Energie zumindest für einen vorgegebenen Zeitraum, zum Beispiel mindestens 5 Stunden, vorzugsweise mindestens 15 Stunden, insbesondere mindestens 24 Stunden, nahezu verlustfrei zu speichern. Ein Wärmespeicher kann im vorliegenden Fall daher auch als Pufferspeicher bezeichnet werden. Vorzugsweise ist der Wärmespeicher auch dazu eingerichtet, zumindest einen Teil der in ihm gespeicherten Wärme bei Bedarf wieder abzugeben, z.B. an ein mit dem Wärmespeicher gekoppeltes Heizungssystem.

In einer weiteren bevorzugten Ausführungsform ist die Trocknungsvorrichtung in einem ersten Speicherbetriebsmodus dazu eingerichtet, dem Luftstrom beim Entfeuchten entzogene Wärme dem Wärmespeicher zuzuführen. Mit anderen Worten kann die Trocknungsvorrichtung den Wärmespeicher im ersten Speicherbetriebsmodus aufladen. Die Trocknungsvorrichtung wird dabei vorzugsweise vor Beginn des Trocknungsprozesses im ersten Betriebsmodus betrieben, um zum Beispiel zu Beginn des Trocknungsprozesses eine besonders große Wärmemenge zur anfänglichen Heizung des Bauwerks zur Verfügung zu haben. Dies kann uns insbesondere bei ungünstigen Witterungsbedingungen wie geringer Außenluftfeuchte und/oder geringer Außentemperatur vorteilhaft sein.

Alternativ oder zusätzlich kann die Trocknungsvorrichtung jedoch auch während des Trocknungsprozesses zumindest zeitweise im ersten Betriebsmodus betrieben werden, insbesondere um den Wärmespeicher wieder aufzuladen. Beispielsweise ist es denkbar, dass die Trocknungsvorrichtung zum Wechsel in den ersten Speicher Betriebsmodus eingerichtet ist, wenn der vorgegebene Temperaturschwellenwert erreicht oder überschritten wird, d.h. wenn zum Beispiel die Gemäuertemperatur und/oder die Heizmediumtemperatur einen Wert erreicht, bei dessen Überschreitung mit Gebäudeschäden zu rechnen ist. Statt zur Vermeidung einer weiteren Temperaturerhöhung die Leistung des Luftentfeuchters und/oder Ventilators zu drosseln oder die Trocknungsvorrichtung vollständig außer Betrieb zu nehmen, kann zumindest ein Teil der erzeugten Wärme dem Wärmespeicher zugeführt werden und so zu einem späteren Zeitpunkt zur Beheizung des Bauwerks zur Verfügung zu stehen.

In einer weiteren bevorzugten Ausführungsform ist die Trocknungsvorrichtung in einem zweiten Speicherbetriebsmodus dazu eingerichtet, dem Luftstrom beim Entfeuchten entzogene Wärme zusätzlich zur dem Wärmespeicher entnommenen Wärme am Heizungssystem des zu beheizenden Bauwerks bereitzustellen. Dadurch können besonders hohe Heizleistung erzielt werden. Dies ist zum Beispiel vorteilhaft, um zu Beginn des Trocknungsprozesses das zunächst verhältnismäßig kühle Bauwerk auf eine gewünschte Trocknungstemperatur zu bringen. Dabei kann durch den Wärmespeicher auf besonders leistungsfähige und dadurch teure und/oder große Luftentfeuchter und/oder Ventilatoren verzichtet werden. Zudem sind der Luftentfeuchter und/oder der Ventilator durch den Wärmespeicher durchgängig mit geringer Leistung betreibbar und/oder auch durch z.B. regenerative Energiequellen, deren Leistungsabgabe zeitlich fluktuiert.

In einer weiteren bevorzugten Ausführungsform ist der Wärmespeicher ein Warmwasserspeicher. Dies ist vorteilhaft, da Wasser eine hohe Wärmekapazität hat und nicht toxisch ist. Ein weiterer Vorteil kann erzielt werden, wenn ein Heizmedium des Heizungssystems ebenfalls Wasser ist. In diesem Fall ist die Trocknungsvorrichtung in bevorzugter Weise dazu eingerichtet, erwärmtes Wasser aus dem Warmwasserspeicher zu entnehmen direkt in das Heizungssystem zu leiten. Dies erlaubt eine besonders effiziente Nutzung der im Wärmespeicher gespeicherten thermischen Energie.

In einer weiteren bevorzugten Ausführungsform weist die Trocknungsvorrichtung ein transportables Gehäuse auf, in dem der Ventilator und der Luftentfeuchter montiert sind. Das Gehäuse kann beispielsweise als, insbesondere genormter und/oder oder standardisierter, Container ausgebildet sein. Dabei handelt es sich vorzugsweise um einen sog. Absetz- oder Abrollcontainer, der von einem Containerfahrzeug, zum Beispiel einem Lastkraftwagen, durch einen Hebe- bzw. Abrollmechanismus auf einfache Weise abgesetzt bzw. abgerollt werden kann. Das transportable Gehäuse ermöglicht dadurch einen besonders flexiblen Einsatz der Trocknungsvorrichtung.

In einer weiteren bevorzugten Ausführungsform weist die Trocknungsvorrichtung eine Wärmeeinrichtung auf, die dazu eingerichtet ist, den Luftstrom nach der Entfeuchtung zu erwärmen. Vorzugsweise weist die Trocknungsvorrichtung zudem eine Ausblaseinrichtung auf, die zum Führen von erwärmter Luft aus der Wärmeeinrichtung in ein zu belüftendes Bauwerk, insbesondere das zu beheizende Bauwerk, eingerichtet ist. Dabei kann die Trocknungsvorrichtung insbesondere dazu eingerichtet sein, den Luftstrom mittels der Wärmeeinrichtung im zweiten Speicherbetriebsmodus zu erwärmen und mittels der Ausgabeeinrichtung in das zu belüftende Bauwerk zu leiten. Die dem Wärmespeicher entnommene Wärme, die zusätzlich zu der dem Luftstrom beim Entfeuchten entzogenen Wärme zur Verfügung steht, ermöglicht es dabei, gleichzeitig sowohl dem entfeuchteten Luftstrom als auch dem Heizungssystem Wärme zuzuführen. Dadurch kann z.B. die Lufttemperatur im zu beheizenden im Bauwerk weiter und/oder schneller erhöht und zudem trockene Luft im Bauwerk bereitgestellt werden, um z.B. eine Bautrocknung noch effektiver zu machen.

Es ist aber auch denkbar, die entfeuchtete und mithilfe der Wärmeeinrichtung erwärmte Luft einem anderen Verwendungszeck zuzuführen. Die Ausblaseinrichtung kann beispielsweise zur Trocknung von Trocknungsgut, insbesondere Pflanzenfasern wie Heu, Stroh und/oder dergleichen, eingerichtet sein. Zu diesem Zweck kann die Ausblaseinrichtung zur Anordnung in einem entsprechenden Trocknungsgebäude, z.B. einer Scheune, einem Silo und/oder dergleichen ausgebildet sein. Insbesondere kann die Ausblaseinrichtung zur Kopplung mit einer entsprechenden Trocknungsanordnung in solch einem Gebäude, z.B. einem Lüftungsboden, ausgebildet sein. Dadurch ist es möglich, die Trocknungsvorrichtung z.B. zum Beheizen eines Bauernhauses oder Stalls und gleichzeitig zur Trocknung von landwirtschaftlichen Gütern einzusetzen. Dies erlaubt eine besonders Effiziente Nutzung der Trocknungsvorrichtung.

Die Trocknungsvorrichtung ist in bevorzugter Weise dazu eingerichtet, den Luftstrom mithilfe der Wärmeeinrichtung selektiv, d.h. zeitweise, zu erwärmen und in die Auslasseinrichtung einzuführen. Zum Beispiel kann die Trocknungsvorrichtung dazu eingerichtet sein, den Ventilator selektiv mit der Ausblaseinrichtung zu koppeln. Dadurch kann sichergestellt werden, dass eine Belüftung des Bauwerks nur stattfindet, wenn der Luftstrom auch erwärmt wird. Insbesondere kann die Trocknungsvorrichtung dazu eingerichtet sein, dass der entfeuchte Luftstrom nur dann erwärmt und in das zu belüftende Gebäude eingeleitet wird, wenn eine ausreichende Gesamtwärmemenge aus dem Luftstrom bei der Entfeuchtung entzogener und dem Wärmespeicher entnommener Wärme vorliegt, die auch das Einbringen einer ausreichenden Wärmemenge in das Heizungssystems erlaub.

Gegebenenfalls kann die Trocknungsvorrichtung auch dazu eingerichtet sein, die Bereitstellung von Wärme am Heizungssystems zugunsten einer Erwärmung des entfeuchteten Luftstroms zumindest zeitweise einzustellen. Dadurch ist z.B. eine Trocknung eines Trocknungsguts möglich, auch wenn kein Gebäude beheizt werden muss, etwa im Sommer.

Vorzugsweise ist die Steuerungseinrichtung dazu eingerichtet, die Wärmeeinrichtung und/oder die Ausblaseinrichtung, insbesondere zusätzlich zu Steuerung des Luftentfeuchters und/oder Ventilators, in Abhängigkeit des sensorisch erfassten Betriebsparameters der Trocknungsvorrichtung zu steuern. Zum Beispiel kann die Steuerungseinrichtung dazu eingerichtet sein, den Luftstrom mithilfe der Wärmeeinrichtung nach der Entfeuchtung zu erwärmen und die erwärmte Luft aus der Wärmeeinrichtung mithilfe der Ausblaseinrichtung in das zu beheizende Bauwerk einzuleiten, wenn zum Beispiel die Arbeitsmediumtemperatur, die Heizmediumtemperatur, die Lufttemperatur im Gebäude und/oder die Gemäuertemperatur einen Temperaturschwellenwert erreicht oder überschreitet. Die Erwärmung und Einleitung des Luftstroms in das Bauwerk können in diesem Fall insbesondere anstelle einer Drosselung der Leistung des Luftentfeuchters und/oder Ventilators stattfinden. Mit anderen Worten kann die Trocknungsvorrichtung dazu eingerichtet sein, die Wärmeeinrichtung und die Ausgabeeinrichtung dann in Betrieb zu nehmen, wenn zur Bauwerkheizung über das Heizungssystem nicht die gesamte dem Luftstrom bei der Entfeuchtung entzogene bzw. dem Wärmespeicher entnommene Wärme zur Bautrocknung benötigt wird.

Die Wärmeeinrichtung ist insbesondere als Heizregister des Luftentfeuchters ausgebildet, wobei das Heizregister zum Beispiel den Kondensator des Arbeitsmediumkreislaufs des Wärmetauschers umfassen kann.

Die Ausblaseinrichtung weist vorzugsweise einen Luftkanal auf, der mit einem ersten Ende in die Wärmeeinrichtung mündet, und dessen gegenüberliegendes zweites Ende im Gebäude positionierbar ist. Die Ausblaseinrichtung kann beispielsweise als, vorzugsweise flexibler, Luftführschlauch ausgebildet sein, zum Beispiel in Form einer Stoffröhre, die gegebenenfalls mit einem spiral- bzw. schraubenförmig gewundenen Draht formstabilisiert sein kann. Das zweite Ende des Luftführschlauchs kann auf diese Weise leicht innerhalb des zu belüftenden Bauwerks platziert werden und/oder mit einer Trocknungsanordnung, z.B. einem Lüftungsboden, gekoppelt werden.

Ein Trocknungsverfahren zum Trocknen eines Gebäudes gemäß einem zweiten Aspekt der Erfindung weist die folgenden Schritte auf: (i) Erzeugen eines Luftstroms; und (ii) Entfeuchten des Luftstroms. Erfindungsgemäß wird die dem Luftstrom beim Entfeuchten entzogene Wärme an einem Heizungssystem des zu beheizenden Bauwerks bereitgestellt.

In einer bevorzugten Ausführungsform wird die Luft zum Erzeugen des Luftstroms aus dem zu beheizenden Bauwerk gesaugt, zum Beispiel mithilfe einer Ansaugeinrichtung. Dies ist vorteilhaft, da die Lufttemperatur in Bauwerken üblicherweise höher ist als die Außenlufttemperatur. Dadurch kann sichergestellt werden, dass dem Luftentfeuchter Luft mit einer zum effizienten Betrieb des Luftentfeuchters ausreichenden Temperatur zugeführt wird. Zudem kann auf diese Weise die gegebenenfalls feuchtigkeitsgesättigte Luft aus dem Bauwerk abgeführt werden, sodass frische, ungesättigte Luft nachströmen kann. Es kann sich somit ein Synergieeffekt zwischen Absaugen der Luft aus dem Bauwerk und Erwärmen des Bauwerks mithilfe der aus der abgesaugten Luft beim Entfeuchten entnommenen Wärme ergeben.

Die in Bezug auf den ersten Aspekt der Erfindung und dessen vorteilhafte Ausgestaltung beschriebenen Merkmale und Vorteile gelten, zumindest wo technisch sinnvoll, auch für den zweiten Aspekt der Erfindung und dessen vorteilhafte Ausgestaltung sowie umgekehrt.

Weitere Merkmale, Vorteile und Anwendungsmöglichkeiten der Erfindung ergeben sich aus der nachfolgenden Beschreibung im Zusammenhang mit den Figuren, in denen durchgängig dieselben Bezugszeichen für dieselben oder einander entsprechende Elemente der Erfindung verwendet werden. Es zeigen wenigstens teilweise schematisch:
- FIG 1: ein Beispiel eines Bauwerks mit einem Heizungssystem, an das eine Trocknungsvorrichtung gekoppelt ist;
- FIG 2: ein Beispiel einer Trocknungsvorrichtung; und
- FIG 3: ein Beispiel eines Trocknungsverfahrens.

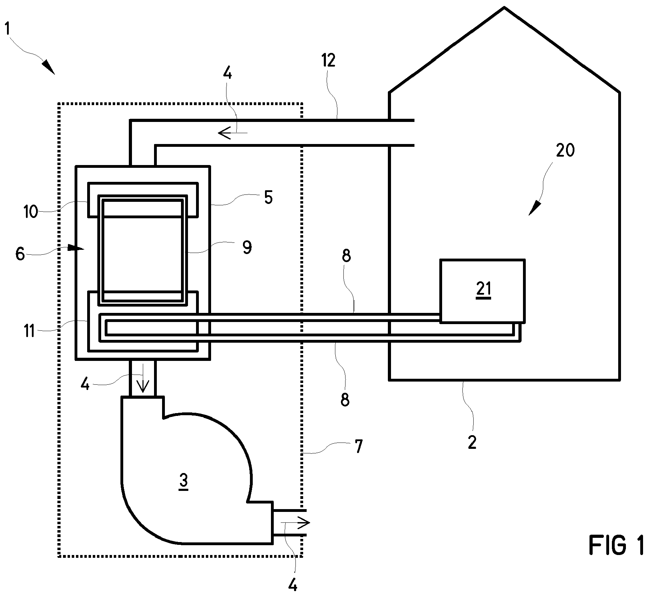

**FIG** 1 zeigt ein Beispiel eines Bauwerks 2 mit einem Heizungssystem 20, an das eine Trocknungsvorrichtung 1 gekoppelt ist. Die Trocknungsvorrichtung 1 weist einen Ventilator 3 zur Erzeugung eines Luftstroms 4 und einen Luftentfeuchter 5 zum Entfeuchten des Luftstroms 4 auf. Der Luftentfeuchter 5 umfasst dabei einen Wärmetauscher 6, der dazu eingerichtet ist, dem Luftstrom 4 Wärme zum Zwecke der Entfeuchtung zu entziehen. Die Darstellung des Luftentfeuchters 5 ist in diesem Ausführungsbeispiel auf sein Kühlregister 10 reduziert, das den Wärmetauscher 6 enthält. Das Kühlregister 10 kann einen Kondensator zur Abführung der Feuchtigkeit aus der abgekühlten Luft aufweisen.

Der Luftentfeuchter 5 kann jedoch auch ein Heizregister aufweisen zum Wiedererwärmen der zuvor abgekühlten Luft. In einem solchen Fall wird im Kühlregister 10 der Luft entzogenen Wärme der Luft im Heizregister wieder zugeführt. Doch im Beispiel aus FIG 1 wird die Wärme auf ein Heizmedium des Heizungssystems 20 übertragen, sodass auf ein Heizregister mit einem darin enthaltenden Wärmetauscher verzichtet werden kann. Der Wärmetauscher 6 ist jedoch vorhanden, jedoch nicht zum Aufheizen der Luft, sondern zum Aufheizen des Heizmediums, das zweckmäßigerweise flüssig ist, insbesondere ist es Wasser. Der Wärmetauscher 6 ist insofern zur Kopplung mit dem Heizungssystem 20 eingerichtet.

Der Ventilator 3 und der Luftentfeuchter 5 sind in einem, vorzugsweise als Container ausgebildeten, transportablen Gehäuse 7 angeordnet, das zur Kopplung des Wärmetauschers 6 mit dem Heizungssystem 20, beispielsweise mithilfe entsprechender Heizmediumleitungen 8, leicht in der Nähe des zu beheizenden Bauwerks 2, zum Beispiel auf einer Baustelle, abgestellt werden kann.

Im gezeigten Beispiel weist der Wärmetauscher 6 einen Arbeitsmediumkreislauf 9 auf, der zur Führung eines Arbeitsmediums durch das Kühlregister 10 des Luftentfeuchters 5 eingerichtet ist. Im Kühlregister 10 kann Arbeitsmediumkreislauf 9 beispielsweise ein Kühlgitter umfassen, welches das Arbeitsmedium führt. Das Kühlgitter wird vorzugsweise vom Luftstrom 4 umströmt, sodass das Arbeitsmedium im Kühlgitter die Wärme aus dem Luftstrom 4, vorzugsweise unter Verdampfung, aufnehmen kann. Der Luftstrom 4 wird im gezeigten Beispiel durch den Luftentfeuchter 5 und somit auch durch das Kühlregister 10 gesaugt, da der Ventilator 3 stromabwärts des Luftentfeuchters 5 angeordnet ist. Alternativ ist es aber auch denkbar, den Luftentfeuchter 5 stromabwärts des Ventilators 3 anzuordnen, sodass der Luftstrom 4 durch den Luftentfeuchter 5 geblasen wird.

Das erhitzte Arbeitsmedium kann dann durch die Kopplung des Wärmetauschers 6 an das Heizungssystem 20 seine Wärme an das Heizungssystem 20 abgeben. Beispielsweise können die Heizmediumleitungen 8 durch einen Kondensator 11 des Luftentfeuchters 5 geführt sein, der nicht zu verwechseln ist mit einem nicht dargestellten Kondensator zur Abscheidung von Feuchtigkeit aus der abgekühlten Luft. Insofern ist der Kondensator ein Arbeitsmedium-Kondensator 11.

In dem Arbeitsmedium-Kondensator 11 kondensiert das dampfförmige Arbeitsmedium unter Wärmeabgabe, um in flüssiger Form zurück zum Kühlregister 10 zurückführbar zu sein und dort wieder Wärme aus dem Luftstrom 4 aufnehmen zu können. Ein von den Heizmediumleitungen 8 geführtes Heizmedium des Heizungssystems 20 nimmt dabei die beim Kondensieren frei werdende Wärme des Arbeitsmediums auf. Das Heizmedium kann über die Heizmediumleitungen 8 dann in einen Heizkörper 21 innerhalb des Bauwerks 2 geführt werden. Die Trocknungsvorrichtung 1 kann in dieser Weise als Zentralheizung dienen. Dieser Wärmetransport kann auch ohne Kondensation des Arbeitsmediums erfolgen, wobei der Kondensator 11 dann allgemein ein Wärmetauscher ist. Insofern kann der Kondensator 11 auch als Wärmetauscher bezeichnet werden.

Die Trocknungsvorrichtung 1 umfasst im gezeigten Beispiel auch eine Ansaugeinrichtung 12, die an dem Luftentfeuchter 5 angeschlossen ist und durch die Luft aus dem Inneren des Bauwerks 2 zum Entfeuchten am Luftentfeuchter 5 bereitgestellt werden kann. Zu diesem Zweck kann die Ansaugeinrichtung 12 als flexibler Luftführschlauch ausgebildet sein, dessen freies, nicht an den Luftentfeuchter 5 angeschlossenes Ende innerhalb des Bauwerks 2 positionierbar ist. Soll Luft von außerhalb des Gebäudes angesaugt werden, kann das freie Ende - ob am flexiblen oder einem starren Luftkanal - außerhalb des Gebäudes positioniert werden. Ist eine steuerbare Weiche mit zumindest zwei freien Enden vorhanden, so kann die Luftzufuhr automatisiert umgeschaltet werden, zweckmäßigerweise in Anhängigkeit von Temperatur und/oder Feuchtigkeit der Luft im und um das Bauwerk 2.

Das Entfeuchten der Luft aus dem Bauwerk 2 ist besonders vorteilhaft, da diese Luft üblicherweise einen hohen Feuchtigkeitsgehalt - z.B. durch die verdunstende Baufeuchtigkeit - und gegebenenfalls auch eine - insbesondere durch das Heizen mithilfe des an das Heizungssystem 20 gekoppelten Wärmetauschers 6 - erhöhte Temperatur aufweist. Damit ist diese Luft besonders energiereich, d.h. dieser Luft kann eine besonders große Wärmemenge zur Abgabe an das Heizungssystem 20 entzogen werden. Zudem kann der Luftentfeuchter 5 bei ihm zugeführter warmer, feuchter Luft besonders effizient arbeiten.

Zum Übertragen der Wärme des Arbeitsmediums an das Heizmedium kann das Arbeitsmedium im Kondensator 11, wie im vorliegenden Beispiel angedeutet, derart geführt werden, dass es die Heizmediumleitungen 8 beim Kondensieren umströmt. Die Kopplung zwischen Wärmetauscher 6 und Heizungssystem 20 entspricht daher einer mittelbaren Verbindung, über die lediglich thermische Energie ausgetauscht werden kann. Der Arbeitsmittelkreislauf 6 und ein Heizmediumkreislauf des Heizungssystems 20 sind daher separat ausgebildet bzw. bleiben getrennt.

Alternativ ist es aber auch denkbar, den Wärmetauscher 6 direkt verbindbar mit dem Heizungssystem 20 auszubilden, insbesondere sodass der Arbeitsmediumkreislauf 9 in das Heizungssystem 20 integriert werden kann. Dabei können Arbeitsmediumkreislauf 6 und Heizmediumkreislauf als ein gemeinsamer Kreislauf ausgebildet sein, wobei das Arbeitsmedium als Heizmedium in das Heizungssystem 20 eingeleitet wird. In diesem nicht gezeigten Fall kann auf den Kondensator 11 verzichtet werden. Das aufgeheizte Arbeitsmedium wird vom Kühlregister 10 aus über eine Heizmediumleitung 8 direkt in das Bauwerk 2 geführt, wo es zum Beispiel mehrere Heizkörper 21 und/oder ein entsprechendes Leitungssystem zur Erwärmung des Bauwerks 2 durchströmt. Dabei kühlt sich das Arbeitsmedium wieder ab. Über eine Heizmediumleitung 8 wird es dann zurück zur Trocknungsvorrichtung 1 und durch das Kühlregister 10 geführt, wo es wieder Wärme aus dem Luftstrom 4 aufnehmen kann. In dieser alternativen Ausbildung entspricht die Kopplung einer unmittelbaren Verbindung, über die das Arbeitsmedium übertragen werden kann. Das Heizungssystem 20 dient dabei als ein Reservoir, aus dem das Arbeitsmedium entnommen und durch den Wärmetauscher 6 geführt werden kann.

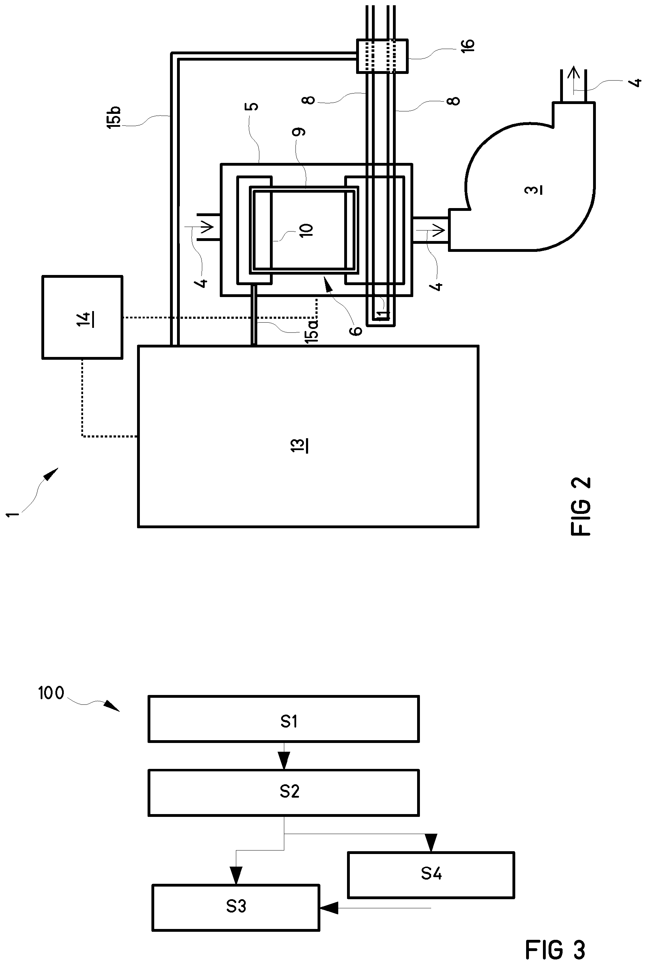

**FIG 2** zeigt ein Beispiel einer Trocknungsvorrichtung 1 mit einem Ventilator 3 zur Erzeugung eines Luftstroms 4 und einem Luftentfeuchter 5 zum Entfeuchten des Luftstroms 4. Die Trocknungsvorrichtung 1 umfasst zudem einen Wärmespeicher 13, der zur Speicherung von dem Luftstrom 4 entzogener Wärme eingerichtet ist, und eine Steuerungseinrichtung 14, welche z.B. zur Steuerung des Luftentfeuchters 5 und Wärmespeichers 13 eingerichtet ist.

Analog zu FIG 1 weist der Luftentfeuchter 5 einen Wärmetauscher 6 zur Kopplung an ein Heizungssystem (siehe FIG 1) eines Bauwerks, einen Kühlmittelkreislauf 9, ein Kühlregister 10 und einen Kondensator 11 auf. Im Unterschied zu FIG 1 ist das Kühlregister 10 zusätzlich über eine Aufladeleitung 15a mit dem Wärmespeicher 13 gekoppelt. Die Trocknungsvorrichtung 1 ist dabei vorzugsweise dazu eingerichtet, ein Speichermedium mithilfe der Aufladeleitung 15a durch das Kühlregister 10 zu führen. Dem Luftstrom 4 entzogene Wärme kann dadurch nicht nur einem Arbeitsmedium im Kühlmittelkreislauf 9, sondern auch dem Speichermedium in der Aufladeleitung 15a zugeführt werden. Die Ladeleitung 15a mündet im Wärmespeicher 13, sodass das durch die dem Luftstrom 4 entzogene Wärme aufgeheizte Speichermedium im Wärmespeicher 13 eingelagert werden kann.

Der Kondensator 11 ist im gezeigten Beispiel, wie im Zusammenhang mit FIG 1 beschrieben, über Heizmediumleitungen 8 mit dem Heizungssystem gekoppelt, sodass mithilfe des vom Arbeitsmediumkreislauf 9 geführten Arbeitsmediums dem Luftstrom 4 entzogene Wärme auf das von den Heizmediumleitungen 8 geführte Heizmedium übertragen werden kann. Darüber hinaus ist eine Heizmediumleitung 8 auch mit einer Wärmeeinrichtung 16 gekoppelt, die über eine Entladeleitung 15b an den Wärmespeicher 13 angeschlossen ist. Die Wärmeeinrichtung 16 ist dazu eingerichtet, aus dem Wärmespeicher 13 entnommener Wärme an ein von der Heizmediumleitungen 8 geführtes Heizmedium des Heizungssystems zu übertragen, und zwar zusätzlich zur mithilfe des Arbeitsmediumkreislaufs 9 auf das Heizmedium übertragenen Wärme.

Die Steuerungseinrichtung 14 ist vorzugsweise dazu eingerichtet, den Betrieb des Luftentfeuchters 5, insbesondere des Wärmetauschers 6, und des Wärmespeichers 13, insbesondere der Wärmeeinrichtung 16, zu koordinieren.

Beispielsweise kann die Steuereinrichtung die Trocknungsvorrichtung 1 derart betreiben, dass die dem Luftstrom 4 entzogene Wärme in einem ersten Speicherbetriebsmodus, vorzugsweise ausschließlich, dem Wärmespeicher 13 zugeführt wird. Zu diesem Zweck kann die Steuerungseinrichtung 14 beispielsweise eine Pumpe (nicht dargestellt) zum Pumpen von Speichermedium durch die Aufladungsleitung 15a in Betrieb nehmen. Um dabei eine Übertragung der Wärme an das Heizungssystem zu vermeiden, kann die Steuerungseinrichtung 14 beispielsweise den Betrieb des Arbeitsmediumkreislaufs 9, insbesondere einer Pumpe zum Pumpen des Arbeitsmediums durch das Kühlregister 10 bzw. den Kondensator 11, aussetzen.

Wenn die Trocknungsvorrichtung 1 zum Trocknen des Gebäudes eingesetzt werden soll, kann die Steuerungseinrichtung 14 einen Wechsel aus dem ersten Speicherbetriebsmodus in einen zweiten Speicherbetriebsmodus veranlassen. In diesem Betriebsmodus kann die Trocknungsvorrichtung 1 das Heizmedium in den Heizmediumleitungen 8 gleichzeitig mithilfe des Wärmetauschers 6 durch Wärme, die dem Luftstrom 4 entzogen ist, und mithilfe der Wärmeeinrichtung 17 durch Wärme, die dem Wärmespeicher 13 entnommen ist, erwärmt werden. Dabei ist es insbesondere denkbar, dass die Trocknungsvorrichtung 1 in einer Anfangsphase, in der besonders viel Wärme zum Heizen des Bauwerks benötigt wird, im zweiten Betriebsspeichermodus betrieben wird. Nachdem eine gewisse Trocknungstemperatur des Bauwerks und/oder ein gewisser Trocknungsgrad erreicht sind, kann die Steuerungseinrichtung 14 auch einen Wechsel aus dem zweiten Speicherbetriebsmodus in einen regulären Betriebsmodus veranlassen, in dem das Heizmedium in den Heizmediumleitungen 8 lediglich mithilfe des Wärmetauschers 6 durch Wärme, die den Luftstrom 4 entzogen ist, erwärmt wird.

**FIG 3** zeigt ein Beispiel eines Verfahrens 100 zum Beheizen eines Bauwerks.

In einem Verfahrensschritt S1 wird ein Luftstrom, zum Beispiel mithilfe eines Ventilators, erzeugt. Zu diesem Zweck kann beispielsweise Außenluft aus der Umgebung des Bauwerks angesaugt werden. Alternativ ist es jedoch auch denkbar, Luft aus dem Bauwerk anzusaugen. Dies kann sogar bevorzugt sein, da die Luft im zu trocknen Gebäude üblicherweise feucht und gegebenenfalls auch warm ist und daher einen hohen Energiegehalt aufweist, der z.B. zur Trocknung des Bauwerks durch Beheizen genutzt werden kann.

In einem weiteren Verfahrensschritt S2 wird dem erzeugten Luftstrom Feuchtigkeit entzogen, zum Beispiel indem der Luftstrom durch einen Luftentfeuchter geführt wird. Der Entfeuchter weist vorzugsweise ein Kühlregister auf, mit dem der Luftstrom auf eine Temperatur unterhalb des Taupunkts gekühlt wird. In einem Kondensator des Luftentfeuchters kondensiert die Flüssigkeit und kann abgeführt werden.

Die dem Luftstrom beim Abkühlen entzogene Wärme wird in einem weiteren Verfahrensschritt S3 an einem Heizungssystem des zu trocknen Bauwerks bereitgestellt, zum Beispiel mithilfe eines Wärmetauschers des Luftentfeuchters, wobei der Wärmetauscher vorzugsweise mit dem Heizungssystem zu Übertragung von Wärme gekoppelt ist.

Der Wärmetauscher kann zum Beispiel einen Kondensator umfassen, in dem die dem Luftstrom entzogene Wärme abgegeben wird. Der Kondensator kann derart eingerichtet sein, dass ein Heizmedium des Heizungssystems durch den Kondensator führbar ist, z.B. indem der Kondensator an Heizmediumleitungen des Heizungssystems angeschlossen werden kann. Das Heizmedium kann so die abgegebene Wärme aufnehmen sodass das Heizungssystem das Bauwerk beheizen kann.

Zusätzlich ist es möglich, dass die dem Luftstrom beim Abkühlen entzogene Wärme in einem weiteren Verfahrensschritt S4 zeitweise einem Wärmespeicher zugeführt wird. Der Verfahrensschritt S4 kann zum Beispiel in einem ersten Speicherbetriebsmodus der in FIG 1 und FIG 2 gezeigten Trocknungsvorrichtungen ausgeführt werden. Im Verfahrensschritt S4, d.h. dem ersten Speicherbetriebsmodus, wird der Wärmespeicher somit aufgeladen.

Der Verfahrensschritt S4 wird in bevorzugter Weise zur Vorbereitung des eigentlichen Trocknungsprozesses ausgeführt. Während des Trocknungsprozesses kann die im Wärmespeicher gespeicherte Wärme dem Heizungssystem dann in Verfahrensschritt S3 zusätzlich zugeführt werden. Dazu kann eine Wärmeeinrichtung vorgesehen sein, beispielsweise ein mit dem Wärmespeicher verbundenes Warmwasserregister, welche zusätzlich zum Wärmetauscher mit dem Heizungssystem koppelbar ausgebildet ist.

### Bezugszeichenliste

- 1: Trocknungsvorrichtung
- 2: Bauwerk
- 3: Ventilator
- 4: Luftstrom
- 5: Luftentfeuchter
- 6: Wärmetauscher
- 7: Gehäuse
- 8: Heizmediumleitung
- 9: Arbeitsmediumkreislauf
- 10: Kühlregister
- 11: Kondensator
- 12: Ansaugeinrichtung
- 13: Wärmespeicher
- 14: Steuerungseinrichtung
- 15a: Aufladeleitung
- 15b: Entlageleitung
- 16: Wärmeeinrichtung
- 20: Heizungssystem
- 21: Heizkörper

## Patentansprüche

1. Trocknungsvorrichtung (1) zum Beheizen eines Bauwerks (2), aufweisend:
- einen Ventilator (3) zur Erzeugung eines Luftstroms (4); und
- einen Luftentfeuchter (5) zum Entfeuchten des Luftstroms (4), wobei der Luftentfeuchter (5) einen Wärmetauscher (6) zum Abkühlen des Luftstroms (4) beim Entfeuchten aufweist,
wobei der Wärmetauscher (6) zur Kopplung mit einem Heizungssystem (20) des zu beheizenden Bauwerks (2) eingerichtet ist.

2. Trocknungsvorrichtung (1) nach Anspruch 1,
**gekennzeichnet durch**
eine Ansaugeinrichtung (12), die zum Führen von Luft aus dem zu beheizenden Bauwerk (2) zum Luftentfeuchter (5) eingerichtet ist.

3. Trocknungsvorrichtung (1) nach einem der Ansprüche 1 oder 2,
**dadurch gekennzeichnet,**
**dass** der Wärmetauscher (6) zum Herstellen einer Verbindung mit dem Heizungssystem (20) derart eingerichtet ist, dass ein Arbeitsmedium des Wärmetauschers (6) in das Heizungssystem (20) über die hergestellte Verbindung einleitbar ist.

4. Trocknungsvorrichtung (1) nach einem der vorangehenden Ansprüche,
**gekennzeichnet durch**
eine Steuerungseinrichtung (14), die dazu eingerichtet ist, den Luftentfeuchter (5) derart zu steuern, dass eine vom Wärmetauscher (6) über die Kopplung an das Heizungssystem (20) übertragene Wärmemenge auf einen vorgegebenen Wärmemengenschwellenwert pro Zeiteinheit begrenzt ist.

5. Trocknungsvorrichtung (1) nach einem der vorangehenden Ansprüche,
**gekennzeichnet durch**
eine Steuerungseinrichtung (14), die dazu eingerichtet ist, den Luftentfeuchter (5) und/oder den Ventilator (3) in Abhängigkeit eines sensorisch erfassten Betriebsparameters der Trocknungsvorrichtung (1) zu steuern.

6. Trocknungsvorrichtung (1) nach einem der vorangehenden Ansprüche,
g**ekennzeichnet durch**
eine Sensoreinrichtung, die dazu eingerichtet ist, einen Betriebsparameter der Trocknungsvorrichtung (1) zu erfassen.

7. Trocknungsvorrichtung (1) nach einem der vorangehenden Ansprüche,
**gekennzeichnet durch**
einen Wärmemittelkreislauf, in dem ein Kühlregister des Luftentfeuchters angeordnet ist, und eine Steuerungseinrichtung (14), die dazu eingerichtet ist, das Wärmemittel so lange im Wärmemittelkreislauf im Kreis zu führen, bis eine Solltemperatur des Wärmemittels erreicht ist.

8. Trocknungsvorrichtung (1) nach einem der vorangehenden Ansprüche,
**gekennzeichnet durch**
eine Luftführung zur Zuführung von Luft zum Luftentfeuchter, die eine Luftkanalweiche mit zwei Zuluftkanälen enthält, von denen ein Zuluftkanal innerhalb des Bauwerks endet und der andere Zuluftkanal außerhalb des Bauwerks endet.

9. Trocknungsvorrichtung (1) nach einem der vorangehenden Ansprüche,
**gekennzeichnet durch**
einen Wärmespeicher (13), der zusätzlich zum Wärmetauscher (6) mit dem Heizungssystem koppelbar ausgebildet ist, wobei die Trocknungsvorrichtung dazu eingerichtet ist, aus dem Wärmespeicher (13) entnommene Wärme am Heizungssystem (20) bereitzustellen.

10. Trocknungsvorrichtung (1) nach Anspruch 9,
**dadurch gekennzeichnet ,**
**dass** die Trocknungsvorrichtung (1) in einem ersten Speicherbetriebsmodus dazu eingerichtet ist, dem Luftstrom (4) beim Entfeuchten entzogene Wärme dem Wärmespeicher (13) zuzuführen.

11. Trocknungsvorrichtung (1) nach einem der Ansprüche 9 oder 10,
**dadurch gekennzeichnet ,**
**dass** die Trocknungsvorrichtung (1) in einem zweiten Speicherbetriebsmodus dazu eingerichtet ist, dem Luftstrom (4) beim Entfeuchten entzogene Wärme zusätzlich zur dem Wärmespeicher (13) entnommenen Wärme am Heizungssystem (20) des zu beheizenden Bauwerks (2) bereitzustellen.

12. Trocknungsvorrichtung (1) nach einem der vorangehenden Ansprüche,
**gekennzeichnet durch**
ein transportables Gehäuse (7), in dem der Ventilator (3) und der Luftentfeuchter (5) montiert sind.

13. Trocknungsvorrichtung (1) nach einem der vorangehenden Ansprüche,
**gekennzeichnet durch**
- eine Wärmeeinrichtung, die dazu eingerichtet ist, den Luftstrom (4) nach der Entfeuchtung zu erwärmen, und
- eine Ausblaseinrichtung, die zum Führen von erwärmter Luft aus der Wärmeeinrichtung in ein zu belüftendes Bauwerk, insbesondere das zu beheizende Bauwerk (2), eingerichtet ist.

14. Trocknungsverfahren (100) zum Trocknen eines Bauwerks (2), aufweisend die Schritte:
- Erzeugen (S1) eines Luftstroms (4); und
- Entfeuchten (S2) des Luftstroms (4),
**gekennzeichnet durch**
- Bereitstellen (S3) von dem Luftstrom (4) beim Entfeuchten entzogener Wärme an ein Heizungssystem (20) des zu beheizenden Bauwerks (2).

15. Trocknungsverfahren (100) nach Anspruch 14,
**dadurch gekennzeichnet,**
**dass** zum Erzeugen des Luftstroms (4) Luft aus dem zu beheizenden Bauwerk (2) gesaugt wird.
